# FASCICULE DE BREVET EUROPEEN

(11) **EP 2 431 204 B1**
(45) Date de publication et mention de la délivrance du brevet: **12.06.2013**
(21) Numéro de dépôt: 11290410.7
(22) Date de dépôt: 15.09.2011
(51) Int. Cl.: B60J 1/04, B60J 1/02, F41H 7/00

(54) **Dispositif de basculement d'un pare-brise**
Kippvorrichtung für eine Windschutzscheibe
Device for tilting a windscreen

(30) Priorité: 17.09.2010 FR 1003709
(43) Date de publication de la demande: 21.03.2012
(73) Titulaire: NEXTER Systems, 42328 Roanne Cedex (FR)
(72) Inventeur: Timmer, Bernard, 18023 Bourges (FR); Germenot, Olivier, 18023 Bourges (FR)
(74) Mandataire: Célanie, Christian

(56) Documents cités:
- DE-A1- 2 033 733
- GB-A- 406 317
- GB-A- 592 272
- GB-A- 741 644
- US-A- 1 878 584

## Description

Le domaine technique de l'invention est celui des dispositifs de basculement des pare-brise de véhicules.

Pour des raisons de commodités de transport, certains véhicules nécessitent de pouvoir abaisser tout ou partie de leur pare-brise. Cet abaissement permet d'avoir un encombrement moindre ou par exemple de faire passer un équipement auxiliaire sans interférer avec le pare brise.

C'est le cas en particulier pour les artilleries montées sur camion porteur et pour lesquelles lors des phases de transport aérien il est nécessaire d'abaisser le tube du canon dans une position sensiblement horizontale ce qui entraîne un passage du canon au travers de la cabine qui ne peut se faire que si le pare-brise est basculé.

Ce type de dispositif d'abaissement est également bien connu sur des véhicules tels que la célèbre jeep ou tels que décrits par le brevet GB592272. Sur ce type de dipositif, la partie vitrée du pare-brise est solidaire d'un cadre ou de montants qui sont articulés par rapport a la structure du véhicule grâce à une liaison pivot horizontale qui est située en dessous du rebord inférieur de la partie vitrée. Cette liaison pivot permet l'abaissement du pare brise le long du capot du véhicule par rotation simple de la partie vitrée.

Cependant sur certains véhicules, notamment véhicules militaires blindés, le pare-brise comporte un vitrage blindé très épais. Cette épaisseur ne permet pas le positionnement d'une charnière sur son bord inférieur permettant le basculement du pare-brise car la surépaisseur du pare brise vient alors interférer avec le capot du véhicule.

Il est par ailleurs parfois impossible pour des raisons d'intégration dans le véhicule de positionner un axe de rotation du pare-brise en dessous de ce dernier.

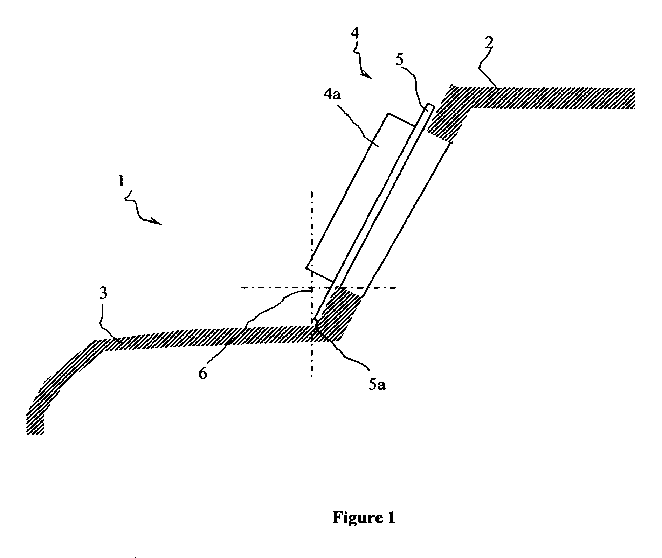

A titre d'exemple la figure 1 montre une configuration de montage d'un pare-brise 4 sur un véhicule 1 dont la structure comporte une cabine 2 ayant un capot avant 3. Ce pare brise 4 comporte une partie vitrée 4a blindée, donc relativement épaisse, et qui est solidaire d'un cadre 5.

On remarque que, dans cette configuration, le bord inférieur 5a du cadre est très proche du capot avant 3. Il n'est pas possible de placer une articulation en dessous de ce bord inférieur 5a.

Si on cherche au contraire à positionner un pivot de rotation 6 solidaire de la structure de la cabine et au dessus du bord inférieur 5a, il est clair qu'un basculement du pare-brise 4 autour de ce pivot 6 est impossible car le bord inférieur 5a interfèrera mécaniquement avec la cabine.

L'invention se propose de résoudre ce problème en proposant des moyens permettant de pivoter le pare-brise sans interférences tout en ayant un axe de pivotement disposé au dessus du rebord inférieur du pare-brise.

Pour cela l'invention incorpore des montants pivotants qui permettent de déplacer le pare-brise par rapport à la cabine de façon à pouvoir l'écarter de cette dernière avant de le faire pivoter. Pour cela, le pare-brise est dans un premier temps amené jusque dans une zone où son basculement pourra se faire, dans un second temps, sans occasionner d'interférences.

L'invention consiste en un dispositif de basculement pour pare-brise de véhicule et en particulier pour pare-brise blindé, dispositif caractérisé en ce qu'il comporte deux montants articulés par une première extrémité avec la structure de la cabine du véhicule, chaque montant étant placé au voisinage de chaque bord latéral du pare-brise, le pare-brise étant relié à chaque montant par une biellette qui est articulée d'un côté à la seconde extrémité dudit montant et de l'autre avec le pare-brise.

Avantageusement l'articulation de la biellette est placée au dessus du centre de gravité du pare brise.

Selon une caractéristique de l'invention, au moins un des montants comporte une surface d'appui pouvant recevoir le pare-brise.

Avantageusement, chaque biellette comporte un moyen de réglage de sa longueur.

Selon une variante de l'invention au moins un des montants comporte un moyen de solidarisation en position basculée du pare-brise avec la structure de la cabine.

Avantageusement, l'invention comprend au moins un ressort équilibreur fixé entre un montant et la structure de la cabine.

L'invention sera mieux comprise à la lecture de la description qui va suivre faite en référence aux figures annexées et dans lesquelles :
La figure 1 (qui a été décrite dans le préambule) représente de manière schématique en coupe latérale une cabine de véhicule incorporant un pare-brise pour lequel se pose le problème que cherche à résoudre l'invention.
La figure 2 représente de manière schématique en coupe latérale une cabine de véhicule équipée d'un dispositif de basculement de pare-brise selon un mode de réalisation de l'invention.
La figure 3 représente de manière schématique en coupe latérale cette cabine de véhicule au moment du décollement du pare-brise.
La figure 4 représente de manière schématique en coupe latérale cette cabine de véhicule, en cours de basculement de pare-brise, avec le pare-brise à la verticale.
La figure 5 représente de manière schématique en coupe latérale cette cabine de véhicule au moment du basculement du pare-brise.
La figure 6 représente de manière schématique en coupe latérale la cabine de véhicule avec le pare-brise posé sur le capot du véhicule.
La figure 7 représente un mode de réalisation de l'invention en vue de trois quart monté sur une cabine de véhicule blindé.
La figure 8 représente une vue de détail de la figure 7.
La figure 9 représente une vue éclatée du dispositif selon la figure 8.

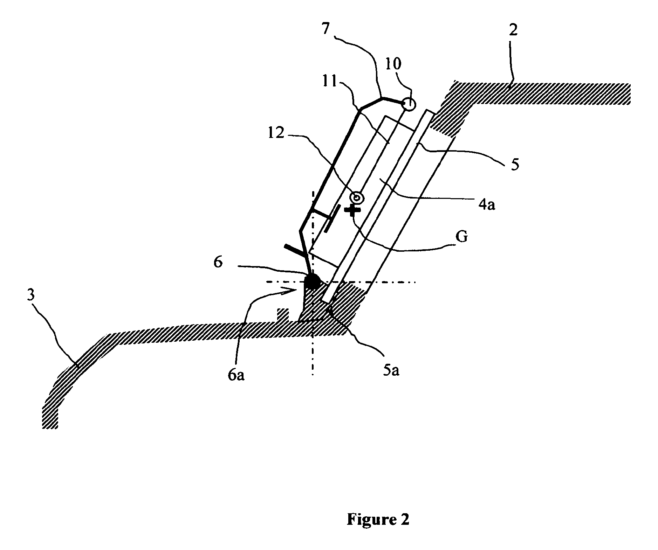

Selon la figure 2 et selon un mode de réalisation de l'invention, le dispositif de basculement de pare-brise proposé par l'invention s'adapte sur la structure de la cabine 2 d'un véhicule tel que représenté à la figure 1. On remarque que le pare-brise 4 a la même configuration et le même positionnement que représenté à la figure 1, donc que le problème d'interférences mécaniques décrit dans le préambule de la présente demande est potentiellement présent. Le pare-brise 4 est formé d'une surface vitrée 4a entourée d'un cadre 5.

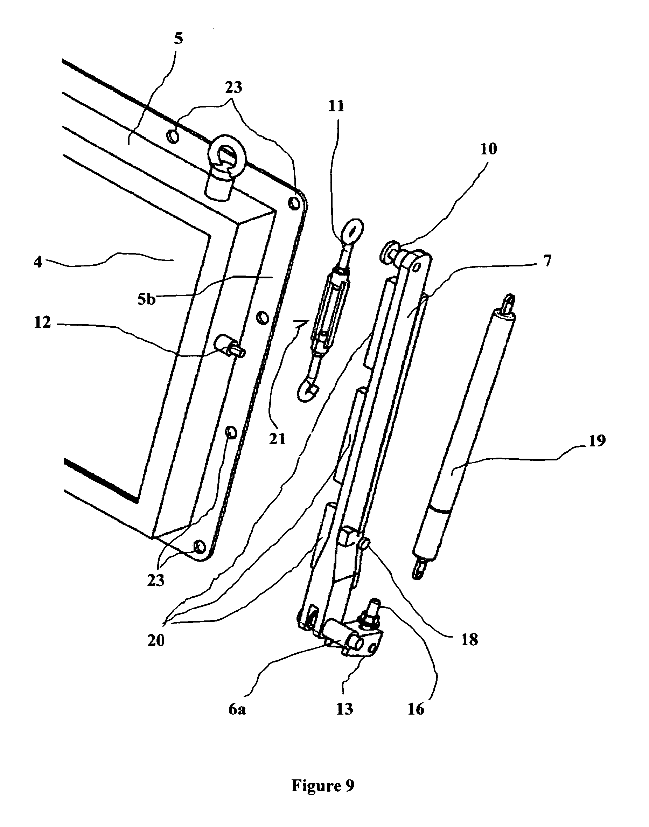

Le cadre 5 est métallique et rectangulaire, il entoure complètement la surface vitrée 4a et assure son maintien. Pour cela le cadre 5 porte sur tout son pourtour un rebord plan 5b qui est percé de trous 23 (visible uniquement à la figure 9) qui permettent la fixation par vissage du pare-brise 4 sur la cabine 2.

Le dispositif de basculement comporte deux montants 7 articulés avec la cabine 2 du véhicule 1 par deux liaisons pivot 6 autour d'un axe géométrique 6a (un seul montant 7 et une seule liaison pivot 6 sont représentés). On remarque que l'axe 6a est positionné au dessus du rebord inférieur 5a du pare-brise 4. L'extrémité supérieure de chaque montant 7 s'étend au dessus de la surface vitrée 4a du pare-brise 4 et elle porte une articulation 10 sur laquelle est fixée une biellette 11.

L'autre extrémité de la biellette 11 est liée au moyen d'une articulation 12 avec le cadre 5 du pare-brise 4, articulation 12 qui est située au dessus du centre de gravité G de ce dernier.

Ainsi, les deux montants 7 ne sont liés au pare-brise 4 que par l'intermédiaire de deux biellettes articulées 11.

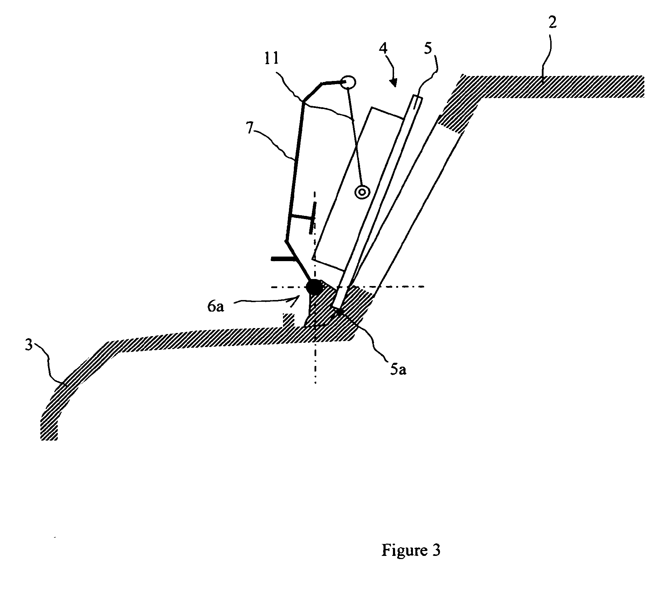

Selon la figure 3, le basculement du montant 7 autour de l'axe 6a vers le capot 3 du véhicule provoque donc la traction de la biellette 11 sur le pare-brise 4. Celui ci se décolle de la cabine 2 dans sa partie supérieure en opérant une rotation autour de l'arête horizontale inférieure 5a du cadre 5. Bien entendu on ne fait pivoter les montants 7 qu'après avoir retiré les vis assurant la fixation du pare-brise 4 sur la cabine 2 du véhicule.

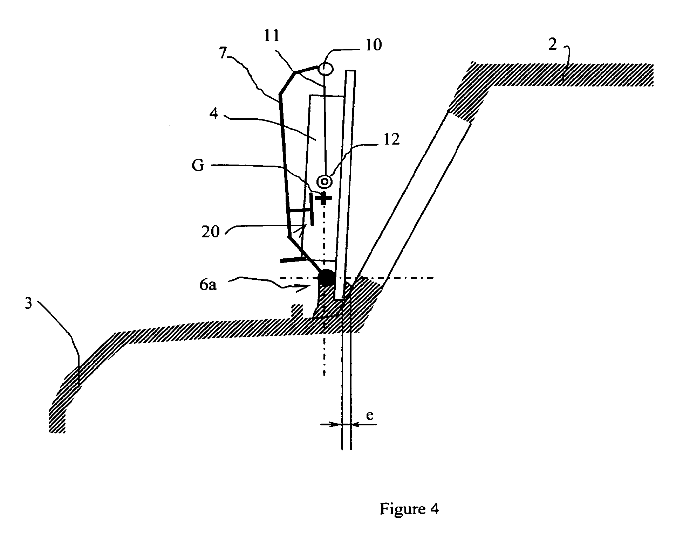

Comme on le voit à la figure 4, en poursuivant le mouvement de rotation des montants 7 autour de leur axe de rotation 6a, le pare-brise 4 s'écarte de la cabine 2 du véhicule (écartement représenté par le repère (e) sur la figure). Le pare-brise 4 est alors suspendu aux montants 7 par les deux biellettes 11. Le centre de gravité du pare brise G va venir se placer par gravité à la verticale de l'articulation supérieure 10 (qui est ici sensiblement dans le même plan que l'axe de rotation 6a).

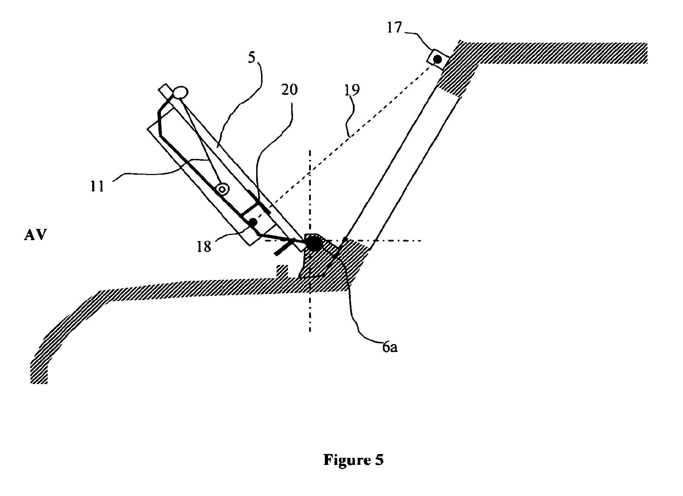

La figure 5 montre qu'en continuant la rotation des montants 7 autour de l'axe de rotation 6a, le centre de gravité G du pare-brise 4 va passer en avant du l'axe 6a entraînant le pare-brise vers l'avant AV du véhicule. Le montant 7 comporte par ailleurs une surface d'appui 20 sur laquelle une surface correspondante du pare-brise 4 va venir s'appliquer (ici il sagit du cadre 5). Cette surface d'appui 20 empêche le balancement du pare brise 4 suspendu aux biellettes 11 et impose au pare brise 4 de suivre la rotation autour de l'axe 6a communiquée par les montants 7.

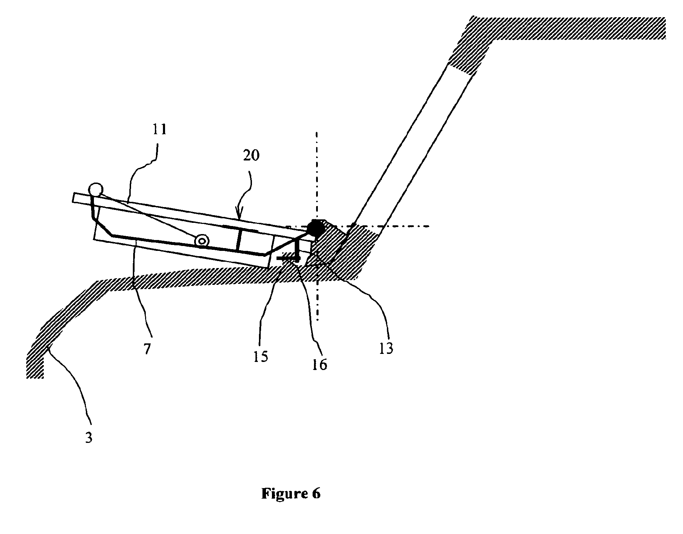

Selon la figure 6, les montants 7 sur lesquels repose désormais le pare brise 4 finissent leur rotation jusqu'au contact avec le capot avant 3 du véhicule. Au moins un des montants 7 comporte un moyen 13 assurant la solidarisation avec la structure de la cabine du véhicule.

Dans l'exemple représenté un montant 7 comporte une patte de fixation 13 qui se positionne en regard d'un plot de fixation 15 solidaire de la structure de la cabine 2 du véhicule 1. La patte 13 et le plot 15 comportent chacun un perçage qui se positionnent en regard l'un de l'autre lorsque le pare-brise 4 est en appui sur le capot avant. Une goupille 16 ou une vis est placée dans ces perçages de façon à rendre les montants 7 et le pare-brise 4 solidaires de la cabine 2. La patte 13, le plot 15 et la vis 16 constituent un dispositif de solidarisation du pare-brise et de la cabine en position basculée.

Il est à noter que dans le cas où le dispositif est utilisé pour la mise en place d'un pare-brise neuf ou pour l'échange du pare-brise, chacune des biellettes 11 comporte un moyen permettant de régler sa longueur pour ajuster la position verticale du pare-brise 4 par rapport à la cabine 2, en positionnant les perçages de fixation du pare-brise 4 par rapport à la cabine du véhicule. Ces moyens de réglage (non représentés) peuvent être par exemple des dispositifs tendeurs à lanterne ou des systèmes vis/écrou.

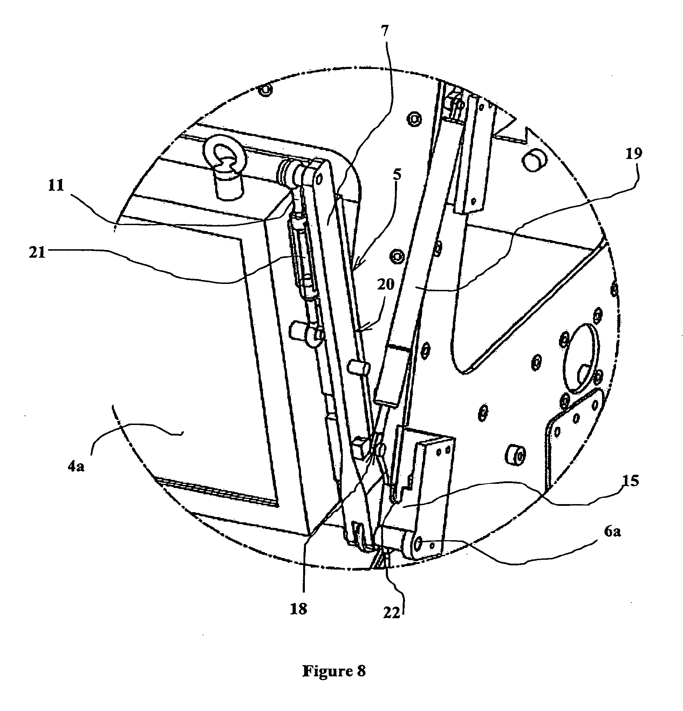

Enfin, compte tenu de la masse d'un pare-brise blindé, des ressorts équilibreurs 19 (par exemple des vérins à gaz - voir figures 5 et 8) seront avantageusement montés entre chaque montant 7 et un point fixe de la cabine voisin du bord supérieur de l'ouverture obturée par le pare-brise.

A titre d'exemple on a représenté sur la figure 5 un point fixe supérieur 17 solidaire de la cabine 2, et un point de fixation 18 solidaire du montant 7. La ligne en pointillés 19 symbolise le ressort équilibreur.

On a vu que l'on pouvait attacher avantageusement les biellettes 11 à une articulation 12 située au dessus du centre de gravité G du pare-brise 4. Une telle disposition facilite le basculement du pare-brise vers les surfaces d'appui 20 des montants 7. Il est également possible de situer l'articulation 12 sensiblement au niveau de ce centre de gravité ou bien légèrement en dessous de ce dernier. Dans ce cas l'équilibre du pare-brise suspendu (figure 4) est instable et il peut pivoter dans un sens ou bien dans l'autre autour de l'articulation 12.

Cependant ceci ne pose guère de problèmes en pratique car les surfaces d'appui 20 (représentées schématiquement sur les figures) s'étendent en fait sensiblement sur toute la longueur des montants 7. Le cadre 5 du pare-brise arrive donc dans tous les cas en butée contre les surfaces d'appui 20, que ce soit par son bord supérieur ou par son bord inférieur.

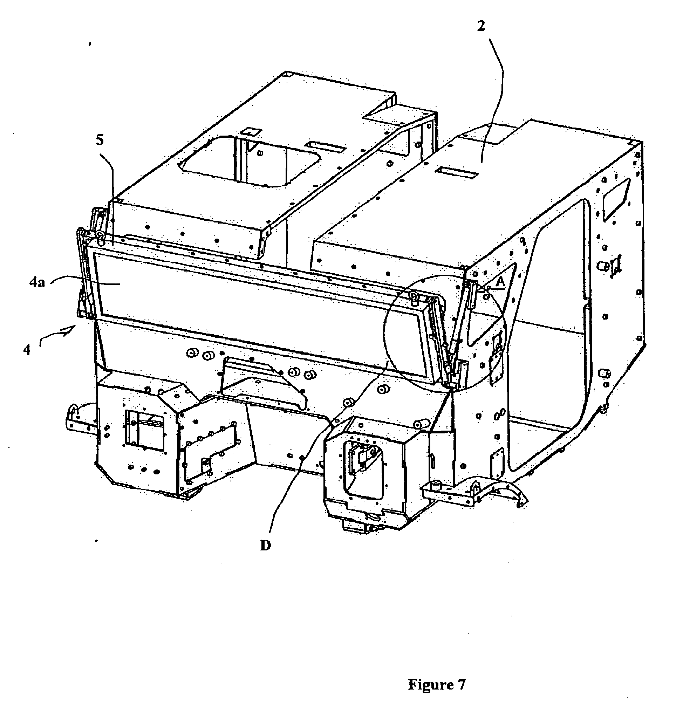

A titre d'exemple on a représenté à la figure 7 un mode de réalisation particulier d'un dispositif selon l'invention adapté sur une cabine blindée 2. Le dispositif de basculement selon l'invention est situé à chaque extrémité du pare brise 4. Un cercle D sur la figure 7 indique la localisation d'un des dispositifs de basculement. Une vue agrandie de ce qui est compris dans ce cercle D est visible à la figure 8.

La figure 8 montre le pare brise 4 légèrement basculé et le cadre 5 du pare-brise 4 est en contact avec la surface 20 du montant 7 qui est plus visible sur la figure 9. On note que la biellette 11 comporte un tendeur à lanterne 21 pour ajuster la longueur de la biellette 11 et donc la position du pare-brise 4. Seul le plot de fixation 15 qui est fixé à la cabine 2 et qui forme une partie du dispositif de solidarisation du pare-brise 4 avec la structure de la cabine 2 est visible. La patte de fixation 13 qui porte une vis 16 permettant le verrouillage est visible à la figure 9.

La figure 9 montre les différents éléments constitutifs du dispositif indépendamment les uns des autres. Il s'agit dans le cas de cette figure d'un dispositif monté à droite du pare brise 4 dont la face extérieure est celle visible sur la figure 9. On remarque que le cadre 5 du pare-brise comporte un rebord 5b percé de trous 23 permettant sa fixation par vissage à la cabine 2. Le montant 7 comporte un rebord latéral formant la surface d'appui 20 sur laquelle s'appliquera le rebord 5b du cadre 5. On voit sur la figure 9 que la patte de fixation 13 du dispositif de verrouillage est constituée par une équerre solidaire du montant 7 et sur laquelle est fixé un ensemble vis/écrou 16. Lorsque le pare-brise est basculé, la vis 16 pénètre dans une gorge 22 portée par le plot de fixation 15 solidaire de la cabine (voir figure 8). L'écrou porté par la vis 16 est ensuite serré pour venir s'appliquer sur le plot 15, fixant ainsi le pare-brise 4 à la cabine 2 en position basculée.

## Revendications

1. Dispositif de basculement pour pare-brise (4) de véhicule et en particulier pour pare-brise (4) blindé, dispositif **caractérisé en ce qu'**il comporte deux montants (7) articulés par une première extrémité avec la structure de la cabine (2) du véhicule, chaque montant (7) étant placé au voisinage de chaque bord latéral du pare-brise (4), le pare-brise (4) étant relié à chaque montant (7) par une biellette (11) qui est articulée d'un côté à la seconde extrémité dudit montant (7) et de l'autre avec le pare-brise (4).

2. Dispositif de basculement pour pare-brise (4) selon la revendication 1, **caractérisé en ce que** l'articulation (12) de la biellette (11) au pare-brise (4) est placée au dessus du centre de gravité (G) du pare brise (4).

3. Dispositif de basculement pour pare-brise (4) selon une des revendications 1 ou 2, **caractérisé en ce qu'**au moins un des montants (7) comporte une surface d'appui (20) pouvant recevoir le pare-brise (4).

4. Dispositif de basculement pour pare-brise selon une des revendications 1 à 3, **caractérisé en ce que** chaque biellette (11) comporte un moyen de réglage de sa longueur (21).

5. Dispositif de basculement pour pare-brise (4) selon une des revendications 1 à 4, **caractérisé en ce qu'**au moins un des montants (7) comporte un moyen de solidarisation (15) en position basculée du pare-brise avec la structure de la cabine (2).

6. Dispositif de basculement pour pare-brise (4) selon une des revendications 1 à 4, **caractérisé en ce qu'**il comprend au moins un ressort équilibreur (19) fixé entre un montant (7) et la structure de la cabine (2).

## Patentansprüche

1. Kippvorrichtung für eine Fahrzeugwindschutzscheibe (4), und insbesondere gepanzerte Windschutzscheibe (4), wobei die Vorrichtung **dadurch gekennzeichnet ist, dass** sie zwei Streben (7) umfasst, welche über ein erstes Ende gelenkig mit der Struktur der Kabine (2) des Fahrzeuges verbunden sind, wobei jede Strebe (7) in der Nähe eines jeweiligen Seitenrandes der Windschutzscheibe (4) angeordnet ist, wobei die Windschutzscheibe (4) mit jeder Strebe (7) durch einen Hebel (11) verbunden ist, welcher an einer Seite mit dem zweiten Ende der genannten Strebe (7) und an der anderen mit der Windschutzscheibe (4) gelenkig verbunden ist.

2. Kippvorrichtung für eine Windschutzscheibe (4) nach Anspruch 1, **dadurch gekennzeichnet, dass** die Anlenkung (12) des Hebels (11) mit der Windschutzscheibe (4) über dem Schwerpunkt (G) der Windschutzscheibe (4) angeordnet ist.

3. Kippvorrichtung für eine Windschutzscheibe (4) nach einem der Ansprüche 1 oder 2, **dadurch gekennzeichnet, dass** wenigstens eine der Streben (7) eine Anschlagfläche (20) umfasst, welche die Windschutzscheibe (4) aufnehmen kann.

4. Kippvorrichtung für eine Windschutzscheibe nach einem der Ansprüche 1 bis 3, **dadurch gekennzeichnet, dass** jeder Hebel (11) ein Mittel zur Einstellung seiner Länge (21) umfasst.

5. Kippvorrichtung für eine Windschutzscheibe (4) nach einem der Ansprüche 1 bis 4, **dadurch gekennzeichnet, dass** wenigstens eine der Streben (7) ein Mittel zum Zusammenhalt (15) der Windschutzscheibe mit der Struktur der Kabine (2) in gekippter Position umfasst.

6. Kippvorrichtung für eine Windschutzscheibe (4) nach einem der Ansprüche 1 bis 4, **dadurch gekennzeichnet, dass** sie wenigstens eine Ausgleichsfeder (19) umfasst, welche zwischen einer Strebe (7) und der Struktur der Kabine (2) befestigt ist.

## Claims

1. A fold down device for the windscreen (4) of a vehicle and in particular for an armoured windscreen (4), device **characterised in that** it incorporates two uprights (7) hinged by a first end to the structure of the vehicle's cab (2), each upright (7) being placed in the vicinity of the lateral edge of the windscreen (4), the windscreen being linked to each upright (7) by a connecting rod (11) that is hinged on one side to the second end of said upright (7) and on the other side to the windscreen (4).

2. A fold down device for a windscreen (4) according to Claim 1, **characterised in that** the hinge (12) of the connecting rod (12) to the windscreen (4) is placed above the centre of gravity (G) of the windscreen (4).

3. A fold down device for a windscreen (4) according to one of Claims 1 or 2, **characterised in that** at least one of the uprights (7) incorporates a bearing surface (20) able to receive the windscreen (4).

4. A fold down device for a windscreen (4) according to one of Claims 1 to 3, **characterised in that** each connecting rod (11) incorporates means (21) to adjust its length.

5. A fold down device for a windscreen (4) according to one of Claims 1 to 4, **characterised in that** at least one of the uprights (7) incorporates means (15) to make the windscreen in its folded down position integral with the cab structure (2).

6. A fold down device for a windscreen (4) according to one of Claims 1 to 4, **characterised in that** it comprises at least one helper spring (19) fixed between an upright (7) and the cab structure (2).
